# EUROPÄISCHE PATENTSCHRIFT

(11) **EP 1 382 579 B1**
(45) Veröffentlichungstag und Bekanntmachung des Hinweises auf die Patenterteilung: **23.12.2009**
(21) Anmeldenummer: 03010723.9
(22) Anmeldetag: 14.05.2003
(51) Int. Cl.: C03B 9/16

(54) **Antriebseinrichtung zum Verschwenken eines Mündungsmechanismus zwischen einer Vor- und einer Fertigform einer Station eines Glasproduktionsmaschine**
Apparatus to turn over a neck mould mechanism between a preform mold and a finish mold of a station of a glass forming machine
Apparareil pour renverser un méchanisme porte moule entre un moule ébaucheur et un moule finisseur d'une partie d'une machine à façonner des articles de verre

(30) Priorität: 17.07.2002 DE 10232241
(43) Veröffentlichungstag der Anmeldung: 21.01.2004
(73) Patentinhaber: GPS GLASPRODUKTIONS-SERVICE GMBH, 45329 Essen (DE)
(72) Erfinder: Blaskowitz, Wolfgang, 45891 Gelsenkirchen (DE); Emrath, Norbert, 45721 Haltern (DE)
(74) Vertreter: Lelgemann, Karl-Heinz

(56) Entgegenhaltungen:
- EP-A- 0 365 718
- EP-A- 0 790 218
- EP-A- 1 127 852
- EP-A- 1 151 970
- WO-A-02/18283
- DE-A1- 19 851 049
- US-A- 4 548 637
- US-A- 4 986 844

## Beschreibung

Die Erfindung bezieht sich auf eine Antriebseinrichtung zum Verschwenken eines Mündungsmechanismus zwischen einer Vor- und einer Fertigform einer Station einer Glasproduktionsmaschine nach dem Oberbegriff des Patentanspruchs 1.

Bei aus dem Stand der Technik bekannten derartigen Antriebseinrichtungen erfolgt die Übertragung der Bewegungsenergie zum Mündungsmechanismus in pneumatisch-mechanischer Weise mittels Kolben- und Zahnstange, durch deren translatorische Bewegung das mündungsseitige Kraftübertragungsglied bewegt bzw. gedreht und dadurch die Schwenkbewegung des Mündungsmechanismus erzeugt wird.

Als schwenkbewegungssteuerndes Element fungiert bei bekannten derartigen Antriebseinrichtungen entsprechend der Hub der Kolbenstange. Bei diesen bekannten Antriebseinrichtungen wird die durch den Kolben pneumatisch erzeugte Hubbewegung zunächst in eine lineare Translationsbewegung an der Zahnstange umgesetzt, bevor diese die lineare Translationsbewegung am Mündungsmechanismus durch dessen Kraftübertragungsglied in eine Rotationsbewegung umwandelt, was ein Verschwenken des Mündungsmechanismus zur Folge hat.

Aus der DE 198 51 049 A1 ist eine Antriebseinrichtung zum Verschwenken eines Mündungsmechanismus zwischen einer Vor- und einer Fertigform einer Station einer Glasproduktionsmaschine bekannt, bei der das als Servomotor ausgebildete Motorteil mit beträchtlichem Abstand in Vertikalrichtung unterhalb des Mündungsmechanismus angeordnet ist. Zwischen der Ausgangsseite des Motorteils und dem mündungsmechanismusseitigen Kraftübertragungsglied ist das sich in Vertikalrichtung erstreckende Schneckengehäuse angeordnet, wobei dieses Schneckengehäuse zur Aufnahme der als Schnecke ausgebildeten Antriebswelle des Motorteils dient. Die Antriebswelle des Motorteils erstreckt sich somit senkrecht zu der mittels des mündungsmechanismusseitigen Kraftübertragungsglieds in Drehung zu versetzenden Wendewelle des Mündungsmechanismus.

Die US 4 986 844 zeigt einen Schwenkmechanismus für die Mündungsformen einer Glasproduktionsmaschine, bei dem ein unmittelbarer Eingriff zwischen dem Ausgangsglied des Motorteils und dem Kraftübertragungsglied des Mündungsmechanismus nicht vorgesehen ist. Vielmehr ist dort das Ausgangsglied des als Elektroservomotor ausgebildeten Motorteils mittels einer Kupplung an eine Antriebswelle angeschlossen, auf der drehfest ein Kegelstirnzahnrad sitzt, das mit einem rechtwinklig dazu angeordneten weiteren Kegelstirnzahnrad kämmt, welches auf der Wendewelle drehfest sitzt. Das Motorteil ist unterhalb einer Grundplatte angeordnet.

Die WO 02/18283, die EP 1 151 970 A2 sowie die EP 0 790 218 A2 zeigen jeweils Wendemechanismen für Glasproduktionsmaschinen sowie deren Antriebseinheiten, bei denen zwischen einem Ausgangsglied eines Motorteils und dem Kraftübertragungsglied des jeweiligen Mündungsmechanismus diverse Getriebestufen vorgesehen sind.

Im Falle der WO 02/18283 A1 ist zwischen dem Motorteil ein Planetengetriebe, dessen Abtriebswelle und ein erstes Zahnrad angeordnet, wobei das erste Zahnrad ein Zwischenzahnrad antreibt, das seinerseits mit einem zweiten Zahnrad kämmt, welches das mündungsmechanismusseitige Kraftübertragungsglied bildet.

Im.Falle der EP 1 151 970 A2 ist zwischen der Ausgangsseite des Motorteils und dem Kraftübertragungsglied des Mündungsmechanismus ein Riemengetriebe angeordnet, dessen Antriebsrad auf der Abgangswelle des Motorteils sitzt und dessen Ausgangsrad seinerseits das Kraftübertragungsglied des Mündungsmechanismus antreibt.

Im Falle des aus der EP 0 790 218 A2 bekannten Wendemechanismus sind zwischen der Ausgangsseite bzw. dem Ausgangsglied des Motorteils und dem Kraftübertragungsteil des Wendemechanismus eine Vielzahl von Getriebeteilen vorgesehen, die u.a. dazu dienen, die Rotationsenergie der senkrecht zur Wendeachse angeordneten Antriebsachse des Motors umzulenken.

Weitere Wendemechanismen sind aus der US 4 548 637, der EP 1 127 852 A2 und der EP 0 365 718 A1 bekannt.

Ausgehend von dem Stand der Technik gemäß der DE 198 51 049 A1 liegt der Erfindung die Aufgabe zugrunde, die eine Antriebseinrichtung zum Verschwenken eines Mündungsmechanismus zwischen einer Vor- und einer Fertigform einer Station einer Glasproduktionsmaschine zu schaffen, die einerseits platzsparend in einer derartigen Station einer Glasproduktionsmaschine angeordnet werden und andererseits in einfacher Weise an vorhandene Mündungsmechanismen adaptiert werden kann.

Diese Aufgabe wird erfindungsgemäß durch die Merkmale im kennzeichnenden Teil des Patentanspruchs 1 gelöst.

Durch die Weglassung von jedweden Übertragungsgliedern zwischen dem Ausgangsglied des Motorteils und dem fest am Mündungsmechanismus vorgesehenen Kraftübertragungsglied kann die Schwenkbewegung des Mündungsmechanismus präzise gesteuert und schnell vorgenommen werden. Zwischen dem motorteilseitigen Ausgangsglied und dem mündungsmechanismusseitigen Kraftübertragungsglied findet eine gleichartige Bewegungsumsetzung statt, d.h., die Rotationsbewegung des motorteilseitigen Ausgangsglieds wird unmittelbar in eine Rotationsbewegung des mündungsmechanismusseitigen Kraftübertragungsglieds umgesetzt. Bei der erfindungsgemäßen Antriebseinrichtung ist eine Steuerung und Korrektur während des kompletten Schwenkvorganges des Mündungsmechanismus möglich, bis hin zu einer Positionshaltung des Mündungsmechanismus. Des Weiteren wird im Falle der erfindungsgemäß ausgestalteten Antriebseinrichtung die Anzahl der Einzelteile und insbesondere auch der Verschleißteile reduziert. Die seitens des Motorteils erzeugte Antriebsenergie kann exakt auf den Mündungsmechanismus übertragen werden. Im Vergleich zu aus dem Stand der Technik, bekannten herkömmlichen Antriebseinrichtungen für die Schwenkbewegung eines Mündungsmechanismus wird im Falle der erfindungsgemäßen Antriebseinrichtung eine erhebliche Platzersparnis erreicht.

Zweckmäßigerweise ist das Motorteil als Servogetriebemotor ausgebildet.

Wenn das Motorteil mittels einer Aufnahmekonsole an der Fertigformkonsole der Glasproduktionsmaschine gehaltert werden kann, kann die erfindungsgemäße Antriebseinrichtung auch bei bisher in anderer Weise angetriebenen Mündungsmechanismen realisiert werden, d.h. die erfindungsgemäße Antriebseinrichtung kann an vorhandene Mündungsmechanismen adaptiert werden. Sie ist quasi universell einsetzbar.

Eine Steuereinheit des Motorteils bzw. des Servogetriebemotors kann sowohl extern plaziert als auch in eine Maschinensteuerung der Glasproduktionsmaschine integriert sein.

Der Steuereinheit des Motorteils bzw. des Servogetriebemotors ist vorteilhaft ein PC mit Visualisierungssoftware zugeordnet, so dass die Schwenkbewegung des Mündungsmechanismus entsprechend den Vorgaben in der Steuereinheit exakt durchgeführt wird und mittels des PC visualisierbar ist.

Im Folgenden wird die Erfindung anhand einer Ausführungsform unter Bezugnahme auf die Zeichnung näher erläutert.

Es zeigen:
- Figur 1: eine perspektivische Ansicht einer Ausführungsform einer erfindungsgemäßen Antriebseinrichtung zum Verschwenken eines Mündungsmechanismus zwischen einer Vor- und einer Fertigform einer Station einer Glasproduktionsmaschine;
- Figur 2: eine Seitenansicht der in Figur 1 gezeigten Aus- führungsform der erfindungsgemäßen Antriebsein- richtung;
- Figur 3: eine Vorderansicht der in Figur 1 gezeigten Aus- führungform der erfindungsgemäßen Antriebsein- richtung; und
- Figur 4: eine Draufsicht der in Figur 1 gezeigten Aus- führungsform der erfindungsgemäßen Antriebsein- richtung.

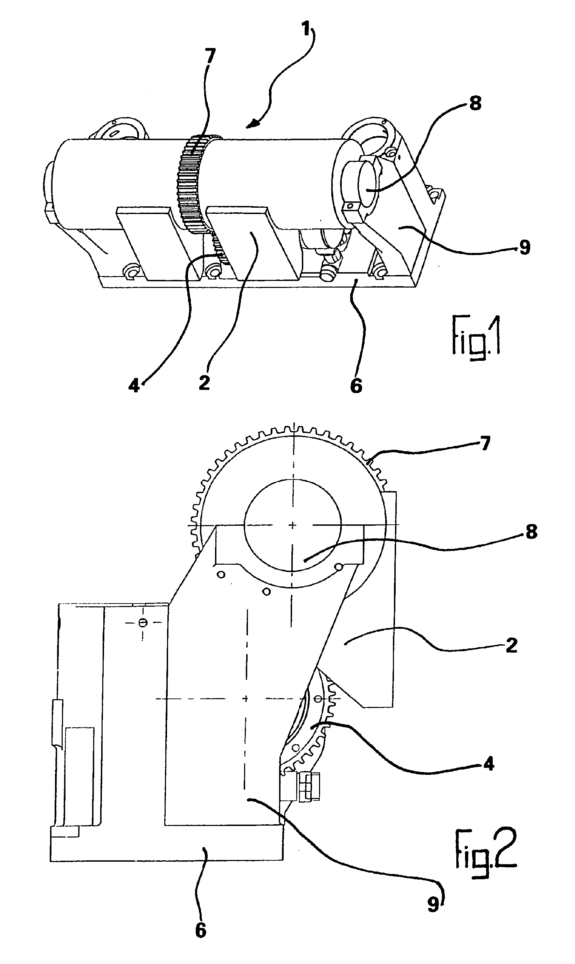

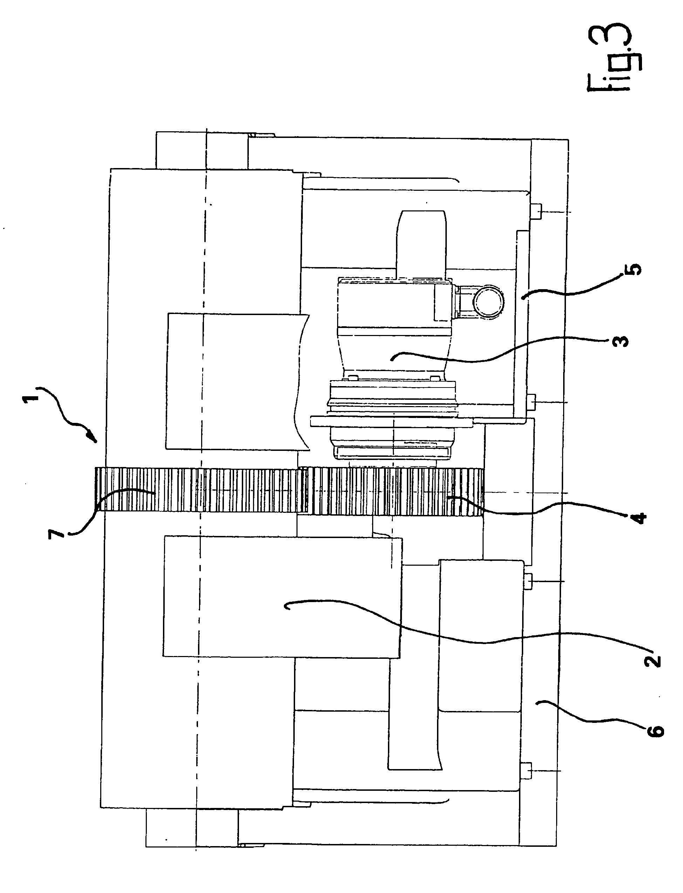

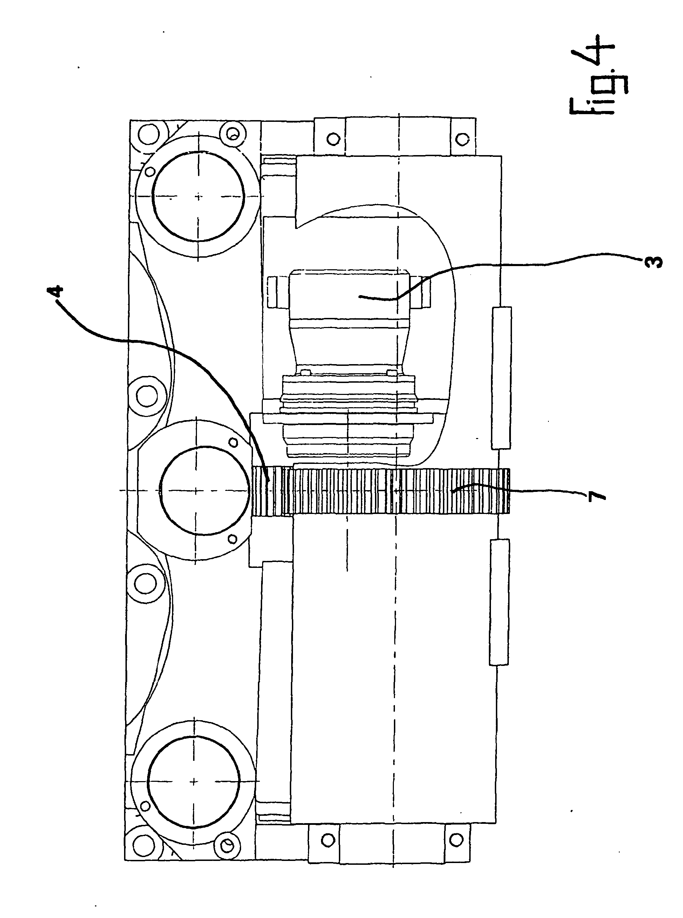

Eine anhand der Figuren 1 bis 4 näher gezeigte Antriebseinrichtung 1 zum Verschwenken eines Mündungsmechanismus 2 beinhaltet einen Servogetriebemotor 3. Mittels des Servogetriebemotors 3 wird die Antriebsenergie zum Verschwenken des Mündungsmechanismus 2 erzeugt.

Der Servogetriebemotor 3 hat als Ausgangsglied ein an ihm befestigtes Antriebszahnrad 4.

Der Servogetriebemotor 3 ist an einer Aufnahmekonsole 5 gehaltert, die ihrerseits an einer Fertigformkonsole 6 angebracht ist.

Hierbei ist die Anordnung des Servogetriebemotors 3 so gewählt, dass dieser in Vertikalrichtung unmittelbar unterhalb des Mündungsmechanismus 2 sitzt. Das servogetriebemotorseitige Antriebszahnrad 4 kämmt mit einem fest am Mündungsmechanismus 2 sitzenden Zahnrad bzw. Zahnkranz 7, so dass die durch den Servogetriebemotor 3 erzeugte Rotationsbewegung aufgrund des unmittelbaren Kämmeingriffs zwischen dem servogetriebemotorseitigen Antriebszahnrad 4 und dem mündungsmechanismusseitigen Zahnrad bzw. Zahnkranz 7 direkt in die Schwenkbewegung des Mündungsmechanismus 2 umgesetzt wird.

Der Mündungsmechanismus 2 ist in der in den Figuren 1 bis 4 gezeigten Ausführungsform mittels zweier Zapfenlager 8 dreh- bzw. schwenkbar an seitlichen Trägern 9 der Fertigformkonsole 6 gelagert.

Dem Servogetriebemotor 3 ist eine Steuereinheit zugeordnet, die entweder als externe Steuereinheit ausgebildet oder in eine Maschinensteuerung der Glasmaschine integriert sein kann. Der Steuereinheit des Servogetriebemotors 3 kann ein PC mit Visualisierungssoftware zugeordnet sein.

Der Servogetriebemotor 3 mit seinem Antriebszahnrad 4 und der Aufnahmekonsole 5 sowie der in den Figuren nicht gezeigten Steuereinheit einschließlich Verkabelung und PC mit Visualisierungssoftware, wobei letztere lediglich optional vorgesehen sein können, kann an bisher anders angetriebenen Mündungsmechanismen 2 montiert werden.

Mittels der vorstehend geschilderten Antriebseinrichtung 1 mit dem Servogetriebemotor 3 ist eine gesteuerte 180 Grad-Schwenkbewegung des Mündungsmechanismus 2 möglich. Die Schwenkbewegung des Mündungsmechanismus 2 kann mit der Antriebseinrichtung 1 exakt gesteuert bzw. kontrolliert werden. Während der Schwenkbewegung des Mündungsmechanismus 2 ist eine Steuerung und eine Korrektur derselben möglich, bis hin zu einer Positionshaltung des Mündungsmechanismus 2.

## Patentansprüche

1. Antriebseinrichtung zum Verschwenken eines Mündungsmechanismus (2) zwischen einer Vor- und einer Fertigform einer Station einer Glasproduktionsmaschine, mit einem Motorteil (3), mittels dem die Antriebsenergie zum Verschwenken des Mündungsmechanismus (2) erzeugbar ist, und einem Kraftübertragungsglied (7), das am Mündungsmechanismus (2) angeordnet und mittels dem die vom Motorteil (3) erzeugte Antriebsenergie in die Schwenkbewegung des Mündungsmechanismus (2) umwandelbar ist, wobei ein Ausgangsglied (4) des Motorteils (3) in unmittelbarem Eingriff mit dem Kraftübertragungsglied (7) des Mündungsmechanismus (2) ist, **dadurch gekennzeichnet, dass** das Motorteil (3) direkt unterhalb des Mündungsmechanismus (2) an einer Fertigformkonsole (6) der Glasproduktionsmaschine angeordnet ist, und dass das motorteilseitige Ausgangsglied als Antriebszahnrad (4) ausgebildet ist, das in Kämmeingriff mit dem als Zahnkranz (7) ausgebildeten mündungsmechanismusseitigen Kraftübertragungsglied ist.

2. Antriebseinrichtung nach Anspruch 1, deren Motorteil als. Servogetriebemotor (3) ausgebildet ist.

3. Antriebseinrichtung nach Anspruch 1 oder 2, bei der das Motorteil (3) mittels einer Aufnahmekonsole (5) an der Fertigformkonsole (6) der Glasproduktionsmaschine gehaltert ist.

4. Antriebseinrichtung nach einem der Ansprüche 1 bis 3, bei der eine Steuereinheit des Motorteils (3) extern angeordnet ist.

5. Antriebseinrichtung nach einem der Ansprüche 1 bis 3, bei der eine Steuereinheit des Motorteils (3) in eine Maschinensteuerung der Glasproduktionsmaschine integriert ist.

6. Antriebseinrichtung nach Anspruch 4 oder 5, bei der der Steuereinheit des Motorteils (3) ein PC mit Visualisierungssoftware zugeordnet ist.

## Claims

1. A drive unit for pivoting a neck mechanism (2) between a blank mould and a finish mould of a station of a glass production machine, with a motor part (3) for generating the motive power for pivoting the neck mechanism (2), and with a power transmission element (7) that is arranged on the neck mechanism (2) and makes it possible to convert the motive power generated by the motor part (3) into a pivoting motion of the neck mechanism (2), wherein an output element (4) of the motor part (3) is directly engaged with the power transmission element (7) of the neck mechanism (2), **characterized in that** the motor part (3) is arranged directly underneath the neck mechanism (2) on a finish mould console (6) of the glass production machine, and **in that** the output element of the motor part is realized in the form of a driving toothed wheel (4) that meshes with the power transmission element on the neck mechanism that is realized in the form of a gear rim (7).

2. The drive unit according to Claim 1, the motor part of which is realized in the form of a geared servomotor (3).

3. The drive unit according to Claim 1 or 2, wherein the motor part (3) is held on the finish mould console (6) of the glass production machine by means of a receptacle console (5).

4. The drive unit according to one of Claims 1 to 3, wherein a control unit of the motor part (3) is arranged externally.

5. The drive unit according to one of Claims 1 to 3, wherein a control unit of the motor part (3) is integrated into a machine control of the glass production machine.

6. The drive unit according to Claim 4 or 5, wherein a PC with visualization software is assigned to the control unit of the motor part (3).

## Revendications

1. Dispositif d'entraînement pour pivoter un mécanisme de sortie (2) entre un pré-moule et une moule de finition d'un poste d'une machine de fabrication du verre, comprenant une partie moteur (3) au moyen de laquelle l'énergie d'entraînement peut être produite pour faire pivoter le mécanisme de sortie (2) et un membre de transmission de force (7) placé sur le mécanisme de sortie (2) et au moyen duquel l'énergie d'entraînement produite par la partie moteur (3) peut être convertie dans le mouvement de pivotement du mécanisme de sortie (2), sachant qu'un membre de sortie (4) de la partie moteur (3) est en prise directe avec le membre de transmission de force (7) du mécanisme de sortie (2), **caractérisé en ce que** la partie moteur (3) est placée sur une console de moule de finition (6) de la machine de fabrication du verre directement sous le mécanisme de sortie (2), et que le membre de sortie côté partie moteur est une roue dentée d'entraînement (4) qui est en prise d'engrenage avec le membre de transmission de force formé comme une couronne dentée (7) côté mécanisme de sortie (2).

2. Dispositif d'entraînement selon la revendication 1, dont la partie moteur est un servomoteur à engrenage.

3. Dispositif d'entraînement selon la revendication 1 ou 2, dans lequel la partie moteur (3) est maintenue sur la console de moule de finition (6) de la machine de fabrication du verre au moyen d'une console de réception (5).

4. Dispositif d'entraînement selon l'une des revendications 1 à 3, dans lequel une unité de commande de la partie moteur (3) est placée de manière externe.

5. Dispositif d'entraînement selon l'une des revendications 1 à 3, dans lequel une unité de commande de la partie moteur (3) est intégrée dans une commande de machine de la machine de fabrication du verre.

6. Dispositif d'entraînement selon la revendication 4 ou 5, dans lequel un PC avec un logiciel de visualisation est attribué à l'unité de commande de la partie moteur (3) .
